# EUROPÄISCHE PATENTSCHRIFT

(11) **EP 0 826 893 B1**
(45) Veröffentlichungstag und Bekanntmachung des Hinweises auf die Patenterteilung: **22.09.1999**
(21) Anmeldenummer: 97112926.7
(22) Anmeldetag: 28.07.1997
(51) Int. Cl.: F16D 48/02

(54) **Drossel für hydraulische Betätigungssysteme**
Throttle for hydraulic actuating systems
Soupape d'étranglement pour systèmes à commande hydrauliques

(30) Priorität: 03.09.1996 DE 19635612
(43) Veröffentlichungstag der Anmeldung: 04.03.1998
(73) Patentinhaber: Mannesmann Sachs Aktiengesellschaft, 97424 Schweinfurt (DE)
(72) Erfinder: Otto, Thomas, Dr., 97469 Gochsheim (DE); Stampf, Volker, Dipl.-Ing., 97422 Schweinfurt (DE); Grosspietsch, Wolfgang, Dipl.-Ing.(FH), 97422 Schweinfurt (DE)

(56) Entgegenhaltungen:
- EP-A- 0 358 899
- DE-A- 3 736 584
- DE-A- 3 824 444
- DE-A- 4 317 604
- US-A- 4 073 311
- US-A- 5 427 138
- PATENT ABSTRACTS OF JAPAN vol. 014, no. 572 (M-1061), 19.Dezember 1990 & JP 02 245522 A (NIPPON AIR BRAKE CO LTD), 1.Oktober 1990,

## Beschreibung

Die Erfindung betrifft eine Einrichtung zur richtungsabhängigen Beeinflussung der Strömungsgeschwindigkeit des Fluids in hydraulischen Betätigungssystemen, insbesondere in solchen von Reibungskupplungen in Kraftfahrzeugen, mit einem Geberzylinder und einem Nehmerzylinder in Form einer Drosselstelle, die gebildet wird durch einen Grundkörper mit mehrere zumindest teilweise verschließbaren Durchgangsbohrungen, gemäß dem Oberbegriff des Anspruchs 1.

Hydraulische Betätigungseinrichtungen für Reibungskupplungen sind allgemein bekannt. Sie bestehen aus einem Geberzylinder, der über das Kupplungspedal beaufschlagbar ist und einem mit dem Geberzylinder über eine Hydraulikleitung verbundenen Nehmerzylinder, der über einen Ausrückmechanismus die Reibungskupplung betätigt.

Beim Auskuppeln strömt Hydraulikflüssigkeit vom Geberzylinder in den Nehmerzylinder, wodurch die Kupplung öffnet. Wird das Kupplungspedal losgelassen, strömt die Hydraulikflüssigkeit vom Nehmerzylinder in den Geberzylinder zurück und die Kupplung wird geschlossen. Wird das Kupplungspedal bei extremer Fahrweise schnell losgelassen, beispielsweise weil der Fahrer mit dem Fuß vom Pedal abrutscht, strömt die Hydraulikflüssigkeit aus dem Nehmerzylinder schnell zurück, wodurch hart eingekuppelt wird und extreme Drehmomentspitzen auftreten können, die ein mehrfaches des Motormoments betragen können. Diese Drehmomentspitzen führen zu einer entsprechend hohen Belastung des Antriebsstranges und verursachen entsprechenden Verschleiß.

Um das schlagartige Schließen der Kupplung zu verhindern, ist beispielsweise in der DE 37 36 584 Al eine eingangs beschriebene Einrichtung in der Hydraulikleitung zwischen dem Geber- und dem Nehmerzylinder vorgesehen. Hierzu ist in einem Gehäuse ein axial verschiebbar gelagerter Kolben mit einer zentralen Durchgangsbohrung und einer Mehrzahl axialer Umfangsnuten angeordnet, der druckfederbelastet in seiner geöffneten Stellung gehalten wird. Beim Auskuppeln strömt das Hydraulikfluid vom Geberzylinder kommend ungehindert durch die zentrale Durchgangsbohrung und die Umfangsnuten in Richtung des Nehmerzylinders. Wird das Kupplungspedal schlagartig losgelassen steigt der Druck an dem federbelasteten Kolben an und dieser läuft axial an die Gehäusewandung an, wodurch die Umfangsnuten verschlossen werden und das Hydraulikfluid nur noch durch die zentrale Durchgangsbohrung zurückströmen kann, so daß das Schließen der Kupplung entsprechend verzögert wird.

Nachteilig an dieser Ausbildung ist, daß sich die Viskosität des Hydraulikfluids während des Betriebes des Kraftfahrzeuges ändert. Bei tiefen Außentemperaturen ist sie entsprechend hoch. Die Strömungsgeschwindigkeit des Fluids wird deshalb grundsätzlich durch die Drosselstelle in beiden Richtungen beeinflußt. Dabei kann nicht ausgeschlossen werden, daß die Drosselung beim Zurückströmen zu hoch ist, und die Kupplung nicht dem vom Fahrer im Normalbetrieb vorgegebenen Weg folgt. Das Pedal bleibt folglich "hängen". Obwohl der Fahrer die Kupplung längst bewußt losgelassen hat, ist die Kupplung noch nicht vollständig eingekuppelt. Da üblicherweise die Motordrehzahl unmittelbar nach Loslassen des Kupplungspedals vom Fahrer erhöht wird, tritt an den Reibbelägen der Kupplung ein entsprechender Verschleiß auf. Auch sonst tritt durch das verzögerte Ansprechverhalten der Kupplung eine Komforteinbuße ein. Eine konstruktive Vergrößerung des Durchflußquerschnitts kann zur Folge haben, daß bei entsprechend hohen Temperaturen und damit einhergehender niedriger Viskosität des Hydraulikfluids die Drosselung nicht mehr ausreichend ist und weiterhin im Extremfall Drehmomentspitzen in den Antriebsstrang übertragen werden.

Moderne Fahrzeuge müssen so konzipiert sein, daß sie weltweit in allen Klimazonen eingesetzt werden können. Das Fahrzeug muß also in arktischen Wintern am Polarkreis ebenso einsetzbar sein, wie in heißen Wüstensommern, ohne daß hierfür spezielle Bauteile verwendet werden müßten.

Aus der DE-A 43 17 604 ist ein Drosselventil bekannt geworden, das ein Gehäuse aufweist, in dem ein Drosselkanal verläuft. Zwei Anschlußöffnungen des Drosselkanals ermöglichen den Anschluß von zu- oder abführenden Einrichtungen von Druckluft. Mit dem Drosselkanal wirkt ein am Gehäuse angeordnetes Drosselorgan zusammen, daß sich zur Regulierung der Durchflußmenge verstellen läßt. Zur Verhinderung einer Strömung der Druckluft gegen die Hauptströmrichtung ist ein Ventilglied angeordnet, das aus einer gummielastischen Scheibe besteht, welche Durchlaßbohrungen abdeckt. Das Ventilglied wirkt als Rückschlagventil dadurch, daß es in der Hauptströmrichtung der Druckluft von den Durchlaßbohrungen abhebt und in der entgegengesetzten Richtung schließt.

Gemäß der DE-A 38 24 444 wird eine Drosselventil mit durch einen Ventilkörper aus einer Memory-Legierung mit Zweiweg-Charakter in Abhängigkeit von der Temperatur eines das Drosselventil durchströmenden Fluids veränderlicher Drosselwirkung beschrieben, welches durch einen sehr guten Wärmeübergang zwischen dem Fluid und dem Ventilkörper ein schnelles Ansprechverhalten bei Temperaturänderungen in beiden Richtungen zeigt und bei welchem eine einfache Befestigung des Ventilkörpers möglich ist. Das Ziel einer Verwendung einer Memory-Legierung ist die Durchflußquerschnittsveränderung innerhalb eines möglichst gering gehaltenen Temperaturbereichs.

Von dieser Problemstellung ausgehend, soll eine gattungsgemäße Einrichtung so fortgebildet werden, daß Viskositätsänderungen des Hydraulikfluids im wesentlichen ausgleichbar sind.

Zur Problemlösung ist eine Einrichtung gemäß Anspruch 1 geschaffen.

Das Elastizitätsverhalten der gummielastischen Scheibe ist temperaturabhängig. Bei niedriger Temperatur ist sie hart und wenig flexibel, bei höherer Temperatur wird sie entsprechend weich, wobei die Elastizitätswerte an sich abhängig sind von dem entsprechend verwendeten Material, so daß eine Einstellung von ganz hart bis ganz weich für den Fachmann durchaus möglich ist. Beim Zurückströmen des Hydraulikfluids vom Nehmerzylinder in den Geberzylinder, legt sich die elastische Scheibe mehr oder weniger über die verschließbare Durchgangsbohrung und deckt diese ab. Der Grad der Abdeckung ist abhängig, von der Elastizität der Scheibe. Ist sie hart, kann die Bohrung nicht vollständig verschlossen werden. Ist sie weich, schmiegt sie sich um die Bohrung herum. Bei entsprechend niedrigen Umgebungstemperaturen kann folglich das hochviskose Hydraulikfluid an den Spalten zwischen dem Grundkörper und der Scheibe durch die nicht vollständig verschlossene Durchgangsbohrung hindurchströmen, wodurch eine entsprechend hohe Strömungsgeschwindigkeit realisierbar ist. Bei höheren Temperaturen wird die Scheibe elastischer und schmiegt sich mehr an die Bohrung an, wodurch diese weiter verschlossen wird und der Rückfluß weiter reduziert wird.

Gemäß der Erfindung ist im Grundkörper eine permanent offene Durchgangsbohrung vorgesehen. Die Scheibe kann dann so elastisch ausgebildet sein, daß sie die andere Durchgangsbohrungen vollständig verschließt, so daß der Rückfluß nur noch über die offene Durchgangsbohrung erfolgt. Durch die geeignete Auswahl der offenen Durchgangsbohrung kann ein definiertes Rückschlußverhalten eingestellt werden.

Um das Öffnungs- bzw. Schließverhalten der Scheibe besser beeinflussen zu können, weist der Grundkörper auf seiner der Scheibe zugeordneten Seite in der Nähe der verschließbaren Durchgangsbohrung mindestens einen in axialer Richtung weisenden Absatz auf. Die Größe des Absatzes bestimmt den Grad des maximalen Verschlusses.

Gemäß der Erfindung ist eine Mehrzahl zumindest teilweise verschließbarer Durchgangsbohrungen vorgesehen, wodurch die Strömungsverhältnisse reproduzierbarer werden. Dabei ist zwischen den Durchgangsbohrungen eine entsprechende Anzahl radialer Stege vorgesehen ist. Diese Durchgangsbohrungen können regelmäßig über einen Umfangskreis verteilt angeordnet sein.

Vorzugsweise sind drei Bohrungen und drei Stege vorgesehen.

Bei dieser Ausbildung kann sich eine weiche Scheibe wellenförmig über die Bohrungen legen und diese - sofern sie entsprechend weich ist - vollständig abschließen. Ist bei tiefen Temperaturen die Scheibe hart, wird sie sich so gut wie nicht verformen und deshalb plan auf den Stegen anliegen, so daß bei der Rückströmung der maximal mögliche Durchflußquerschnitt erzielt wird.

Der Grundkörper kann aus Kunststoff bestehen und dadurch kostengünstig hergestellt werden.

Insbesondere vorteilhaft ist es, wenn der Grundkörper topfförmig mit einem zentral in Richtung des Nehmerzylinders weisenden, die permanent offene Durchgangsbohrung aufweisenden Dorn ausgebildet ist, die Scheibe axial auf dem Dorn geführt und zwischen der topfförmigen Ausstülpung und der Scheibe ein geringer Umfangsspalt vorgesehen ist. Durch diese Ausgestaltung ist eine sichere Anordnung und Führung der Scheibe möglich. Durch die Wahl des Umfangsspaltes zwischen der Scheibe und dem Grundkörper, ist das Durchflußverhalten des Hydraulikfluids vom Nehmerzylinder zum Geberzylinder (Rückfluß) beeinflußbar.

Die Drosselstelle kann sowohl in den Druckbereich des Geberzylinders als auch in den Nehmerzylinder integriert sein. Dadurch kann eine kompakte Bauform des Gesamtsystems realisiert werden.

Mit Hilfe einer Zeichnung soll ein Ausführungsbeispiel der Erfindung näher erläutert werden. Es zeigt:
- Figur 1 -: die Drosselstelle im Axialschnitt in vereinfachter Darstellung;
- Figur 2 -: die Draufsicht auf die Drosselstelle gemäß Schnitt II-II nach Figur 1;
- Figur 3 -: die schematische Anordnung des hydraulischen Betätigungssystems in einem Kraftfahrzeug.

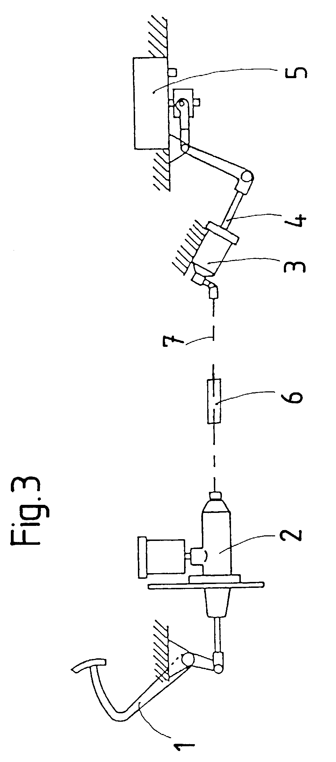

Das hydraulische Betätigungssystem für die Reibungskupplung eines Kraftfahrzeuges besteht aus dem über das Kupplungspedal 1 aktivierbaren Geberzylinder 2, der über eine Hydraulikleitung 7 mit einem Nehmerzylinder 3 verbunden ist, der über eine Ausrückvorrichtung 4 auf die Reibungskupplung 5 einwirkt. In der in Figur 3 mit gestrichelter Linie dargestellten Hydraulikleitung 7 ist die Einrichtung 6 zur Beeinflussung der Strömungsgeschwindigkeit des Hydraulikfluids vorgesehen. Die Einrichtung 6 muß nicht zwingend in die Hydraulikleitung 7 integriert sein, sondern sie könnte sich auch im Druckbereich des Geberzylinders 2 oder im Nehmerzylinder 3 befinden.

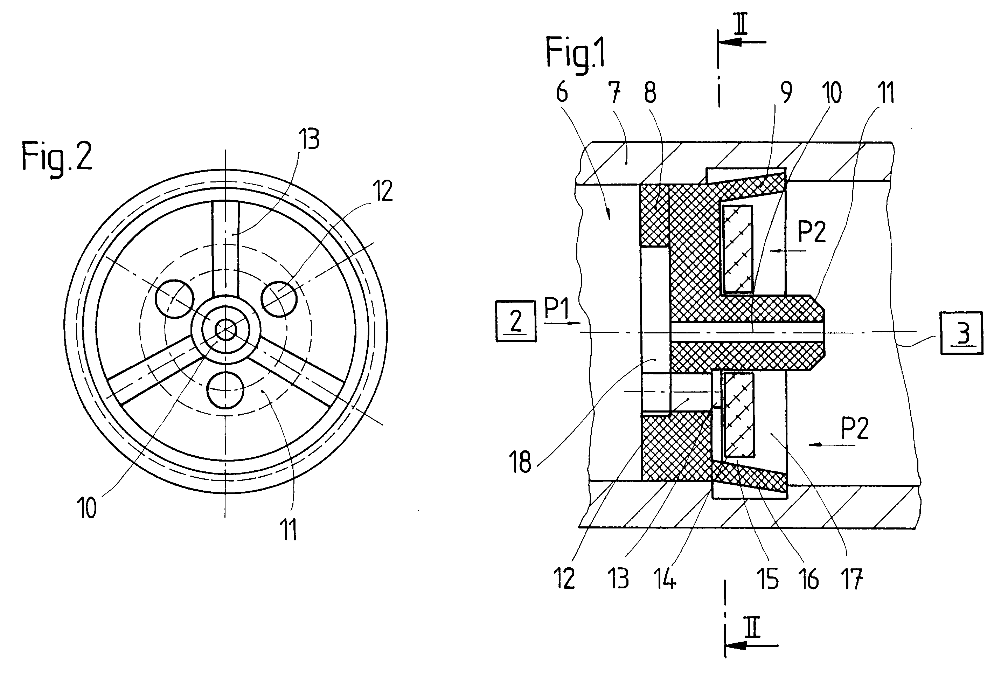

Wie Figur 1 zeigt, besteht das Drosselelement aus dem aus Kunststoff gefertigten Grundkörper 8 und der auf einem in axialer Richtung weisenden, am Grundkörper 8 ausgebildeten Dorn 11 geführten Scheibe 14. Der Grundkörper 8 ist auf seiner dem Geberzylinder 2 zugewandten Seite mit einer größeren zentralen Ausnehmung 18 versehen, zu der koaxial eine permanent offene Durchgangsbohrung 10 im Dorn 11 verläuft. Radial versetzt hierzu setzen sich von der Ausnehmung 18 drei Durchgangsbohrungen 12 fort, die in den durch den Dorn 11 und die Ausstülpung 9 gebildeten Ringraum 17 münden.

Die Bohrungen 12 sind jeweils um 120° versetzt auf einem Kreis angeordnet. Zwischen den Bohrungen 12 verlaufen drei radiale Stege 13, auf denen die Scheibe 14 aufliegt, so daß die Bohrungen 12 solange die Scheibe 14 nicht belastet wird, geöffnet sind. Über die topfförmige Ausstülpung 9, die sich kegelstumpfförmig nach außen öffnet, ist der Grundkörper 8 in einer Umfangsnut 16 in der Hydraulikleitung 7 axial fixiert.

Wird der Geberzylinder 2 beaufschlagt, strömt Hydraulikflüssigkeit in Richtung des Pfeils P₁ über die Ausnehmung 18 durch die Bohrungen 10 und 12 in Richtung des Nehmerzylinders 3. Durch das durch die Bohrungen 12 strömende Hydraulikfluid wird die Scheibe 14 von den radialen Stegen 13 abgehoben. Beim Rückfluß vom Geberzylinder 3 strömt das Hydraulikfluid gemäß den Pfeilen P₂. Ein Teil fließt ungehindert zurück durch die Durchgangsbohrung 10 zum Geberzylinder 2. Aufgrund der Druckkraft, die auf die Scheibe 14 einwirkt, wird diese auf die Stege 13 gedrückt und verformt sich in Abhängigkeit ihrer Elastizität mehr oder weniger stark. Ist die Scheibe 14 hart (tiefe Temperatur) kann sie die Bohrungen 12 nicht oder nur gering verschließen. Über den Ringspalt 15 (Umfangsspalt) strömt das entsprechend hochviskose Hydraulikfluid auch durch die Bohrungen 12 zurück zum Geberzylinder 2. Ist die Scheibe 14 hingegen weich (hohe Temperaturen) schmiegt sie sich um die radialen Stege 13 herum und nimmt eine wellenförmige Kontur ein, mit der sie gegebenenfalls die Bohrungen 12 vollständig verschließt. Das Hydraulikfluid kann nur noch über die Durchgangsbohrung 10 zum Geberzylinder 2 zurückfließen.

Durch entsprechende Versuche muß ein Werkstoff für die Scheibe gefunden werden, der entsprechend der Viskositätsänderung des Fluids seine Elastizität ebenfalls ändert, um die Temperaturabhängigkeit des Hydraulikfluids zu kompensieren. Sofern es notwendig ist, grundsätzlich einen Rückfluß an Hydraulikfluid durch die Bohrungen 12 zuzulassen, um die Funktionsfähigkeit der Kupplung aufrecht zu halten, muß der Werkstoff der Scheibe 14 so gewählt werden, daß ein vollständiges Verschließen der Bohrungen 12 ausgeschlossen ist. Sie darf folglich nicht knetweich sein. Wesentlicher Gedanke der Erfindung ist, daß zumindest eine nicht vollständig verschließbare Durchgangsbohrung vorgesehen ist. Wenn, wie im beschriebenen Ausführungsbeispiel eine permanent offene Durchgangsbohrung 10 vorgesehen ist, kann hierüber der Rückfluß definiert eingehalten werden. Es ist dann möglich, die Scheibe 14 knetweich auszubilden. Stellt sich heraus, daß die Durchgangsbohrung allein nicht geeignet ist, den Rückfluß definiert aufrecht zu erhalten, weil die Einbauverhältnisse nur einen begrenzten Durchmesser zulassen, muß dann zusätzlich ein Rückfluß über die Bohrungen 12 aufrecht erhalten werden.

### Bezugszeichenliste

- 1: Kupplungspedal
- 2: Geberzylinder
- 3: Nehmerzylinder
- 4: Ausrückvorrichtung
- 5: Reibungskupplung
- 6: Einrichtung/Drosselstelle
- 7: Hydraulikleitung
- 8: Grundkörper
- 9: Ausstülpung
- 10: Durchgangsbohrung
- 11: Dorn
- 12: Durchgangsbohrung
- 13: Steg
- 14: Scheibe
- 15: Umfangsspalt
- 16: Umfangsnut
- 17: Ringraum
- 18: Ausnehmung

## Patentansprüche

1. Einrichtung zur richtungsabhängigen Beeinflussung der Strömungsgeschwindigkeit eines Fluids in hydraulischen Betätigungssystemen, insbesondere in solchen von Reibungskupplungen in Kraftfahrzeugen, mit einem Geberzylinder (2) und einem Nehmerzylinder(3) in Form einer Drosselstelle (6), die gebildet wird durch einen Grundkörper (8) mit wenigstens einer permanent offenen Durchgangsbohrung (10) und einer Scheibe (14) aus gummileastischem Material, wobei diese Scheibe (14) in einer ersten Strömungsrichtung (P2) in Richtung mehrerer zumindest teilweise verschließbarer Durchgangsbohrungen (12) geschoben und in einer zweiten Strömungsrichtung (P1) von diesen Durchgangsbohrungen (12) weg geschoben wird,
**dadurch gekennzeichnet,**
daß zwischen den Durchgangsbohrungen (12) eine entsprechende Anzahl radialer Stege (13) vorgesehen ist, auf denen die Scheibe (14) bei Strömung des Fluids in der ersten Strömungsrichtung aufliegt, aber die Durchgangsbohrungen (12) nicht verschließt, sofern die Scheibe (14) nicht belastet ist.

2. Einrichtung nach Anspruch 1,
**dadurch gekennzeichnet,**
daß der Grundkörper (8) topfförmig mit einem zentral in Richtung (P1) des Nehmerzylinders (3) weisenden, die permanent offene Durchgangsbohrung (10) aufweisenden Dorn (11) ausgebildet ist, der die Scheibe (14) axial führt und zwischen einer topfförmigen Ausstülpung (9) und der Scheibe (14) einen Umfangsspalt (15) offen läßt.

3. Einrichtung nach Anspruch 1,
**dadurch gekennzeichnet,**
daß die Drosselstelle in den Druckbereich des Geberzylinders (2) integriert ist.

4. Einrichtung nach Anspruch 1, wobei eine Abhängigkeit der Viskosität des Fluids von dem Elastizitätsverhalten der Scheibe (14) bei unterschiedlichen Temperaturen zum Zwecke der Erzielung möglichst gleichmäßiger Strömungsgeschwindigkeiten angestrebt wird,
**dadurch gekennzeichnet,**
daß das gummielastische Material der Scheibe (14) bei niedrigen Temperaturen hart ist und dadurch plan auf den Stegen (13) aufliegt, wodurch die zwischen den Stegen (13) liegenden Durchlaßbohrungen (12) nicht verschlossen werden und ein maximal möglicher Durchflußquerschnitt erzielt wird.

5. Einrichtung nach Anspruch 4,
**dadurch gekennzeichnet,**
daß das gummielastische Material der Scheibe (14) bei hohen Temperaturen weich ist und dadurch nicht nur auf den Stegen (13) aufliegt, sondern auch die zwischen den Stegen (13) liegenden Durchlaßbohrungen (12) entsprechend der Temperatur mehr und mehr verschließt, wodurch ein zunehmend kleiner werdender Durchflußquerschnitt erzielt wird.

6. Einrichtung nach Anspruch 1,
**dadurch gekennzeichnet,**
daß die Drosselstelle (6) in den Nehmerzylinder (3) integriert ist.

## Claims

1. Device for directionally influencing the flow velocity of a fluid in hydraulic actuating systems, in particular in those of friction clutches in motor vehicles, with a master cylinder (2) and a slave cylinder (3), in the form of a throttle point (6) which is formed by a basic body (8) with at least one permanently open passage bore (10) and with a disc (14) made of elastomeric material, this disc (14) being pushed in a first direction of flow (P2) towards a plurality of partially closeable passage bores (12) and being pushed away from these passage bores (12) in a second direction of flow (P1), characterized in that between the passage bores (12) is provided a corresponding number of radial webs (13), on which the disc (14) rests when the fluid flows in the first direction of flow, but does not close the passage bores (12), insofar as the disc (14) is not subjected to load.

2. Device according to Claim 1, characterized in that the basic body (8) is of ball-shaped design, with a spindle (11) which points centrally in the direction (P1) of the slave cylinder (3) and has the permanently open passage bore (10) which axially guides the disc (14) and leaves a circumferential gap (15) open between a ball-shaped protuberance (9) and the disc (14).

3. Device according to Claim 1, characterized in that the throttle point is integrated into the pressure region of the master cylinder (2).

4. Device according to Claim 1, in which the aim is to achieve a dependence of the viscosity of the fluid on the elasticity behaviour of the disc (14) at different temperatures for the purpose of achieving flow velocities which are as uniform as possible, characterized in that, at low temperatures, the elastomeric material of the disc (14) is hard and therefore rests flat on the webs (13), with the result that the passage bores (12) located between the webs (13) are not closed and a maximum possible throughflow cross section is achieved.

5. Device according to Claim 4, characterized in that, at high temperatures, the elastomeric material of the disc (14) is soft and therefore not only rests on the webs (13), but also closes the passage bores (12) located between the webs (13) increasingly according to the temperature, with the result that an increasingly smaller throughflow cross section is achieved.

6. Device according to Claim 1, characterized in that the throttle point (6) is integrated into the slave cylinder (3).

## Revendications

1. Dispositif de réglage en fonction de la direction de la vitesse d'écoulement d'un fluide dans des systèmes de commande hydrauliques, en particulier dans des accouplements à friction de véhicules à moteur, comportant un maître-cylindre (2) et un cylindre récepteur (3) en forme de zone d'étranglement (6), qui est formée par un corps de base (8) comprenant au moins un alésage traversant ouvert en permanence (10) et un disque (14) en matériau en gomme élastique, ce disque (14) étant poussé dans une première direction de l'écoulement (P2) dans la direction de plusieurs alésages traversants partiellement obturables (12) et étant repoussé de ces alésages traversants (12) dans une deuxième direction de l'écoulement (Pl),
**caractérisé en ce qu'il**
est prévu, entre les alésages traversants (12), une pluralité d'ailettes radiales correspondantes (13), sur lesquelles le disque (14) vient en appui lors de l'écoulement du fluide dans la première direction d'écoulement, sans toutefois obturer les alésages traversants (12), tant que le disque (14) n'est pas en charge.

2. Dispositif selon la revendication 1,
**caractérisé en ce que**
le corps de base (8) est conçu en forme de pot avec une broche (11) orientée centralement dans la direction (P1) du cylindre récepteur (3), présentant l'alésage traversant ouvert en permanence (10), et qui guide axialement le disque (14) et laisse ouverte une fente périphérique (15) entre une protubérance (9) en forme de pot et le disque (14).

3. Dispositif selon la revendication 1,
**caractérisé en ce que**
la zone d'étranglement est intégrée au domaine de pression du maître-cylindre (2).

4. Dispositif selon la revendication 1, dans lequel on s'efforce d'obtenir une dépendance de la viscosité du fluide du comportement élastique du disque (14) pour des températures différentes aux fins d'obtenir des vitesses d'écoulement aussi uniformes que possible,
**caractérisé en ce que**
le matériau en caoutchouc-métal du disque (14) est dur à basses températures et repose donc à plat sur les ailettes (13), les alésages traversants (12) se trouvant entre les ailettes (13) n'étant pas obturés et une section transversale d'écoulement maximal possible étant obtenue.

5. Dispositif selon la revendication 4,
**caractérisé en ce que**
le matériau en gomme élastique du disque (14) est mou à hautes températures et de ce fait ne repose pas sur les ailettes (13), mais obture également de plus en plus les alésages traversants (12) se trouvant entre les ailettes (13) à mesure que la température augmente, une section transversale d'écoulement de plus en plus petite étant ainsi obtenue.

6. Dispositif selon la revendication 1,
**caractérisé en ce que**
la zone d'étranglement (6) est intégrée au cylindre récepteur (3).
